# EUROPÄISCHE PATENTSCHRIFT

(11) **EP 2 198 580 B1**
(45) Veröffentlichungstag und Bekanntmachung des Hinweises auf die Patenterteilung: **30.04.2014**
(21) Anmeldenummer: 08803708.0
(22) Anmeldetag: 05.09.2008
(51) Int. Cl.: H04L 29/06

(54) **VERFAHREN UND ANORDNUNG ZUM BEREITSTELLEN VON VOIP-KOMMUNIKATION**
METHOD AND ARRANGEMENT FOR PROVIDING VOIP COMMUNICATION
PROCÉDÉ ET DISPOSITIF POUR ÉTABLIR UNE COMMUNICATION VOIX SUR IP

(30) Priorität: 27.09.2007 DE 102007046350
(43) Veröffentlichungstag der Anmeldung: 23.06.2010
(73) Patentinhaber: Unify GmbH & Co. KG, 81379 München (DE)
(72) Erfinder: KUNTE, Klaus-Josef, 33178 Borchen (DE); BOZIONEK, Bruno, 33178 Borchen (DE); HANNA, Thomas, 32758 Detmold (DE)
(74) Vertreter: Fritzsche, Thomas
(86) Internationale Anmeldenummer: PCT/EP2008/061738
(87) Internationale Veröffentlichungsnummer: WO 2009/043682

(56) Entgegenhaltungen:
- WO-A-2007/036399
- SRIVASTAVA K ET AL: "Preventing Spam For SIP-based Instant Messages and Sessions" INTERNET CITATION, [Online] XP002381421 Gefunden im Internet: URL:http://www.cs.columbia.edu/techreports /cucs-042-04.pdf> [gefunden am 2006-05-15]

## Beschreibung

Die Erfindung betrifft ein Verfahren zum Bereitstellen von VoIP-Kommunikation nach dem Gattungsbegriff des Anspruchs 1 und eine Anordnung zum Bereitstellen von VoIP-Kommunikation nach dem Gattungsbegriff des Anspruchs 10.

Ein Telefonieren über ein Computernetzwerk auf der Grundlage des Internetprotokolls (IP) ist als so genanntes Voice-over-IP (VoIP) bekannt. Bei VoIP wird die Telephonie dabei auf Datennetze verlagert, insbesondere das Internet.

Hieraus resultieren Kosteneinsparungen für einen Teilnehmer der VoIP Kommunikation, die dazu führen, dass damit einhergehend mit einer zunehmenden Verbreitung und Nutzung von VoIP auch zu einem steigenden Anteil von SPIT-Anrufen, sogenanntem Spam over Internet Telephony (SPIT) zu rechnen ist.

SPIT ist dabei als für einen Nutzer ähnlich störend anzunehmen wie eine Spam-Email, vielleicht sogar noch störender, da im Unterschied zur Email es bei einem SPIT-Anruf laut klingelt und der Hörer abgenommen wird, nur, damit eine elektronische Stimme eine unerwünschte Ansage ausgibt und das womöglich sogar nachts.

Ferner ergeben sich hierdurch auch einige mögliche Angriffsszenarien bzw. Missbrauchsszenarien, zum Beispiel den Lockanruf zur Weiterleitung an eine kostenpflichtige Nummer und den Werbeanruf zur automatisierten Anbahnung eines Geschäfts. Im ersten Fall nutzt der SPIT-Anrufer die Ansage dazu, den Angerufenen auf eine kostenpflichtige Nummer zu leiten. Im zweiten Fall wird dem Angerufenen ein Geschäft unterbreitet, das nicht zu seinen Gunsten sein soll.

Dass SPIT ein zunehmendes Problem darstellt, hat ein amerikanisches VoIP-Unternehmen in einer Simulation bewiesen. Dabei zeigte sich, dass ein Spammer bis zu 1000 SPIT-Nachrichten pro Minute an IP-Telefone verschicken kann. Hierdurch ergibt sich ein unglaubliches Stör- und Unkosten-Potential, zumal sich mit SPIT-Anrufen auch Denial-of-Service-Attacken gegen IP-Telefonanschlüsse starten lassen.

Diese Art des weltweiten Telephon-Spams ist im Moment für den Spammer günstig durchzuführen, denn besitzt er einen Account bei dem Anbieter seiner Opfer, dann kostet ihn in der Regel ein Anruf derzeit nichts. Die Rückverfolgung des Anrufers zum Ursprung ist zwar technisch möglich, in der Praxis ist dies aber, wie schon heute bei den bekannten Telefonwerbebotschaften, nahezu unmöglich, da die SPIT-Anrufer irgendwo auf der Welt sitzen können oder die entsprechenden Firmen für eine rechtliche Verfolgung nicht lange genug existieren.

Natürlich besteht auch bei VoIP-Verbindungen die Gefahr, dass SPIT-Anrufer einfach unter einer falschen Identität agieren. Man spricht in diesem Fall von "Vishing-Anrufen", wobei Vishing für Voice-over-IP-Phishing steht. Dies definiert also die unberechtigte Verwendung falscher bzw. fremder Identitäten durch Kriminelle per Telefon. Beim so genannten Call-Vishing ruft ein Automat eine Liste von Nummern an. Eine Standardansage fordert zur Abgabe sensibler Daten, wie etwa Kontoverbindung, PIN, TAN-Listen, Kreditkartennummer, eBay- oder Paypal-Account-Daten auf. Solche Szenarien sind durch das höhere Vertrauen in die Kommunikationsform Telefon für die Kriminellen besonders reizvoll, und diverse Institutionen wie z.B. Banken warnen bereits ihre Kunden vor SPIT und Vishing.

Zur Vermeidung dieser Aktivitäten ist es beispielsweise bekannt, eine Sperrung eines Anrufers vorzunehmen, wenn von ein und derselben Quelle eine unzulässig hohe Anzahl von Anrufen abgesendet wird.

Ferner gibt es auch den Ansatz, so genannte "White-Lists" einzurichten, in die man aufgenommen wird, in dem sich Personen und Institutionen registrieren, bevor ein Anruf zum Anrufer durchgestellt wird.

Auch gibt es so genannte "Black-Lists", die Teilnehmerkennungen enthalten, bei denen ein Anruf nicht signalisiert werden soll und bei denen statt dessen in Abhängigkeit der Anruferkennungen verschiedene Reaktionen durchgeführt werden, wie Abweisung, Umleitung auf eine Voicebox, oder der Verweis auf eine kostenpflichtige Alternativ-Rufnummer.

Des Weiteren sind so genannte "Buddy-Lists" bekannt, bei denen der Angerufene eine Liste von Teilnehmern führt, von denen er Anrufe entgegen nehmen möchte. Des Weiteren ist auch die Stimm-Erkennung der Anrufer, um einen SPIT-Anrufer anhand seiner Stimme zu erkennen.

Derzeit werden SPIT-Abwehrmaßnahmen von einigen Betreibern von Internet Übergängen durchgeführt. Dies erfolgte jedoch ohne einheitliche Regelung und teilweise auch ohne offiziellen Auftrag in Eigenverantwortung der Betreiber. Das Fehlen dieser offiziellen Regelung kann hier auch zu Unklarheiten bei der Definition von SPIT und bei der Umsetzung entsprechender Abwehrmaßnahmen führen. In der Regel findet eine Filterung der VoIP-Anrufe also erst beim Angerufenen, oder in einer größeren Firma über deren VoIP Vermittlungseinrichtung (VoIP-Softswitch) statt. Dort gibt es mehrere mehr oder weniger effiziente Verfahren zur Erkennung und Beseitigung von SPIT.

In WO 2007/036399 A1 ist ein Verfahren zur Vermeidung des Empfangs unerwünschter Nachrichten in einem IP-Kommunikationsnetzwerk beschrieben, bei dem von einem Endgerät eines ersten Teilnehmers zwecks des Aufbaus einer Kommunikationsverbindung eine Verbindungsanfrage an ein Endgerät eines zweiten Teilnehmers übermittelt wird, wobei von dem Endgerät des ersten Teilnehmer zum Nachweis seiner Vertrauenswürdigkeit im Zuge der Verbindungsanfrage eine Transaktionsnummer an das Endgerät des zweiten Teilnehmers übermittelt wird.

Alle bisherigen technischen Verfahren zur Abwehr der geschilderten Gefahren bieten keine zufrieden stellende Lösung zum Schutz gegen SPIT und Vishing da sie ineffizient sind und keinen omnipotenten Schutz bilden.

Die Aufgabe der Erfindung ist es, ein Verfahren und eine Anordnung zum Bereitstellen von VoIP-Kommunikation anzugeben, welche gegenüber dem Stand der Technik verbesserte Abwehrmechanismen zur Verfügung stellen.

Diese Aufgabe wird ausgehend von dem Oberbegriff des Anspruchs 1 durch dessen kennzeichnende Merkmale sowie ausgehend vom Gattungsbegriff des Anspruchs 17 durch dessen kennzeichnende Merkmale gelöst.

Gemäß dem Verfahren zum Bereitstellen von Kommunikation in einem VoIP-Kommunikationsnetzwerk mit einer Vielzahl von Netzknoten nach der Erfindung, wird
a) von zumindest einem ersten Teilnehmerendgerät des VoIP-Kommunikationsnetzwerks eine zumindest eine vom Nutzer des ersten Teilnehmerendgerätes gewünschte Eigenschaft von VoIP-Verbindungen enthaltende erste Information in zumindest einem ersten Netzknoten des VoIP-Kommunikationsnetzwerks hinterlegt, wobei
b) bei Vorhandensein eines Wunsches nach einer Verbindung zum ersten Teilnehmerendgerät seitens eines zweiten Teilnehmerendgerätes,
   b1) seitens des zweiten Teilnehmerendgerätes die erste Information von dem ersten Netzknoten angefordert wird,
   b2) das zweite Teilnehmerendgerät auf Grundlage zumindest der ersten Information zumindest ein die Verbindung beschreibendes Datenelement bildet,
   b3) das zweite Teilnehmerendgerät das die Verbindung beschreibende Datenelement an ein dem Netz zugeordnetes eine Durchschaltung von direkten Verbindungen zwischen Kommunikationspartnern bereitstellendes Funktionselement übermittelt, und wobei
c) das Funktionselement das Datenelement derart auswertet, dass es auf Grundlage von zumindest der ersten Information
   die Verbindung zwischen dem ersten Teilnehmerendgerät und dem zweiten Teilnehmerendgerät etabliert.

Ein wesentlicher Vorteil des erfindungsgemäßen Verfahrens liegt darin, dass einem angerufenen Endgerät die Möglichkeit gegeben wird, Einfluss auf eingehende Anrufe, insbesondere dahingehend zu nehmen, dass Anrufe entsprechend von seitens des Nutzers des angerufenen Endgeräts erwünschten Eigenschaften behandelt werden.

Vorteilhafter Weise erfolgt bei einer Weiterbildung dabei, dass das erste Teilnehmerendgerät als erste Information eine Angabe über zumindest eine für Verbindungen mit dem ersten Teilnehmerendgerät zugelassenen Art von Verbindung beifügt, so erhält er zusätzliche Freiheitsgrade bei der Beeinflussung von eingehenden Anrufen.

Eine weitere vorteilhafte Alternative bzw. Ergänzung besteht darin, dass das erste Teilnehmerendgerät als erste Information eine Angabe über zumindest eine für Verbindungen mit dem ersten Teilnehmerendgerät zugelassene Kategorie des Gesprächsinhalts beifügt. Hierdurch kann der Teilnehmer gezielt unerwünschte Gesprächsinhalte ausschließen. Wenn er beispielsweise generell keine gewerblichen Gespräche am Privatanschluss abwickeln will, so lässt sich dies hiermit vorteilhaft realisieren. Auch ist es umgekehrt möglich, private Gespräche an (bestimmte) Anschlüsse zu blocken. Natürlich lässt sich durch die Erfindung auch feingranularer der besonders zu behandelnde Inhalt festlegen. So können zum Beispiel gewerbliche Gespräche durchaus zugelassen und lediglich als Werbung gekennzeichnete Gespräche geblockt werden oder gezielt Werbung zulassen, wenn es sich um Werbung handelt, die vom Teilnehmer ausdrücklich erwünscht ist, wie beispielsweise Angebote seines Autohändlers, Sonderangebote seines Reiseunternehmens oder Ähnliches.

Fügt das erste Teilnehmerendgerät als erste Information eine Angabe über eine erste Gültigkeitsdauer einer Verbindung bei, so kann ein Anruf mit wenig erwünschtem Inhalt in seiner Dauer begrenzt werden.

Alternativ oder ergänzend fügt das erste Teilnehmerendgerät als erste Information eine Angabe über eine zweite Gültigkeitsdauer für die Zeit des Vorhaltens einer bei der Verbindung hinterlegten Sprachnachricht bei. Hierdurch können Ressourcen effektiver genutzt werden, wenn Nachrichten, insbesondere mit wenig erwünschtem Gesprächsinhalt, nicht bis Ultimo Speicherplatz belegen. Somit wird eine Verdrängung von gespeicherten unerwünschten Inhalten durch zu speichernde erwünschte Inhalte erreicht.

Wird die Erfindung derart weitergebildet, dass das erste Teilnehmerendgerät als erste Information eine Angabe über eine dritte Gültigkeitsdauer einen Zeitraum, in dem ein Hinterlegen einer Sprachnachricht möglich ist, beifügt, so kann der Teilnehmer Zeiten bestimmen, in denen Anrufen mit wenig erwünschtem Inhalt beispielsweise eine Umleitung auf einen Sprachspeicher zur Ablage einer Nachricht gewährt wird.

Von Vorteil ist es auch, wenn durch das erste Teilnehmerendgerät als erste Information eine Folge von auf dem ersten Netzknoten ausführbaren Anweisungen beigefügt wird. Hierdurch können beliebige Endgeräte in die Lage versetzt werden, die vom Teilnehmer gewünschten Handlungen, die in Abhängigkeit der ersten Information erfolgen sollen, durchzuführen. Eine Individualisierung ist somit möglich und eine Sicherstellung, dass das erwünschte Ergebnis tatsächlich durch die im Netz vorhandenen Ressourcen erzielt wird.

Vorzugsweise wird die Erfindung derart weitergebildet, dass durch den ersten Netzknoten und/oder das zweite Teilnehmerendgerät zur Bildung des Datenelements eine erste das zweite Teilnehmerendgerät für den Empfang der ersten Information adressierende erste Adresse der ersten Information hinzugefügt wird. Hierdurch wird ein Beeinflussen derart möglich, ob ein Anrufer, der durchgestellt werden soll auch mit dem Anforderer der ersten Information übereinstimmt. So wird ein Missbrauch und eine unerwünschte Weitergabe der ersten Information verhindert.

Vorzugsweise prüft dabei der erste Netzknoten die erste Adresse dahingehend, ob sie eine gemäß dem Domain Name System Dienst "DNS" gebildete Adresse ist, so dass, falls die Prüfung ergibt, dass die erste Adresse eine nicht nach DNS auflösbare Adresse ist, ein Versenden der ersten Information unterbleibt.

Wird durch das zweite Teilnehmerendgerät zur Bildung des Datenelements eine die Kategorie des Gesprächs beschreibende Information der ersten Information hinzugefügt, lässt sich die Vorgabe seitens des ersten Teilnehmerendgeräts automatisiert prüfen.

Dabei kann als Weiterbildung als erster Netzknoten das erste Teilnehmerendgerät verwendet werden, so dass die Ressourcen des Netzes geschont werden und zudem dem ersten Teilnehmerendgerät die Kontrolle über die erste Information überlassen wird.

Alternativ kann als erster Netzknoten ein dem Netz zugeordnetes Gerät mit zur Durchschaltung von direkten Verbindungen zwischen Kommunikationspartnern bereitstellender Funktion verwendet werden. Hierdurch können also zentralen Einrichtungen eines Kommunikationsnetzes wie beispielsweise einer Vermittlungseinrichtung die Kontrolle überlassen werden.

Alternativ oder ergänzend kann als erster Netzknoten ein Email-Server verwendet werden, so dass ein als Teil einer E-Mail oder einer elektronischen Visitenkarte versandtes Verbindungskennzeichen als Teil der E-Mail vorgehalten werden kann. Auch ist es möglich, dass als erster Netzknoten ein Web-Server verwendet wird, so dass das Verbindungskennzeichen als Teil eines im World Wide Web angebotenen Inhalts vorgehalten werden kann.

Wird die erste Information für eine begrenzte Zeit im Netz vorgehalten, so kann ein zusätzlicher Freiheitsgrad bei der Steuerung seitens des ersten Teilnehmerendgeräts gewährleistet werden und stets möglichst dem aktuellen Wunsch entsprochen werden. Außerdem wird so der Missbrauch der ersten Information erschwert und Ressourcen werden effektiver genutzt.

Vorzugsweise hinterlegt nach Ablauf der begrenzten Zeit das erste Teilnehmerendgerät erneut eine erste Information.

Die erfindungsgemäße Anordnung zum Bereitstellen von Kommunikation in einem VoIP-Kommunikationsnetzwerk zeichnet sich durch Mittel zur Durchführung des Verfahrens nach einem der vorhergehenden Ausgestaltungen aus und stellt so die körperliche Grundlage für die Realisierung des Verfahrens zur Verfügung.

Weitere Einzelheiten der Erfindung sowie Vorteile werden ausgehend von in den Figuren 1 bis 5 dargestellten Ausführungsbeispielen der Erfindung näher erläutert. Dabei zeigt
- Figur 1: schematisch die Anwendung des erfindungsgemäßen Verbindungskennzeichens,
- Figur 2: schematisch ein Ausführungsbeispiel, bei welchem das zweite Teilnehmerendgerät das Verbindungskennzeichen zur Überprüfung bei einem dem ersten Teilnehmerendgerät zugeordneten Knoten hinterlegt,
- Figur 3: schematisch ein Ausführungsbeispiel, bei dem dies an eine Vermittlungsstelle gesendet wird und somit auf einem dem zweiten Teilnehmer zugeordneten Knoten hinterlegt ist,
- Figur 4: schematisch ein Ausführungsbeispiel, bei dem hierzu ein öffentlicher oder ein privater Service zur Ausstellung von Verbindungskennzeichen genutzt wird,
- Figur 5: schematisch den Aufbau eines Verbindungskennzeichens nach einem Ausführungsbeispiel.

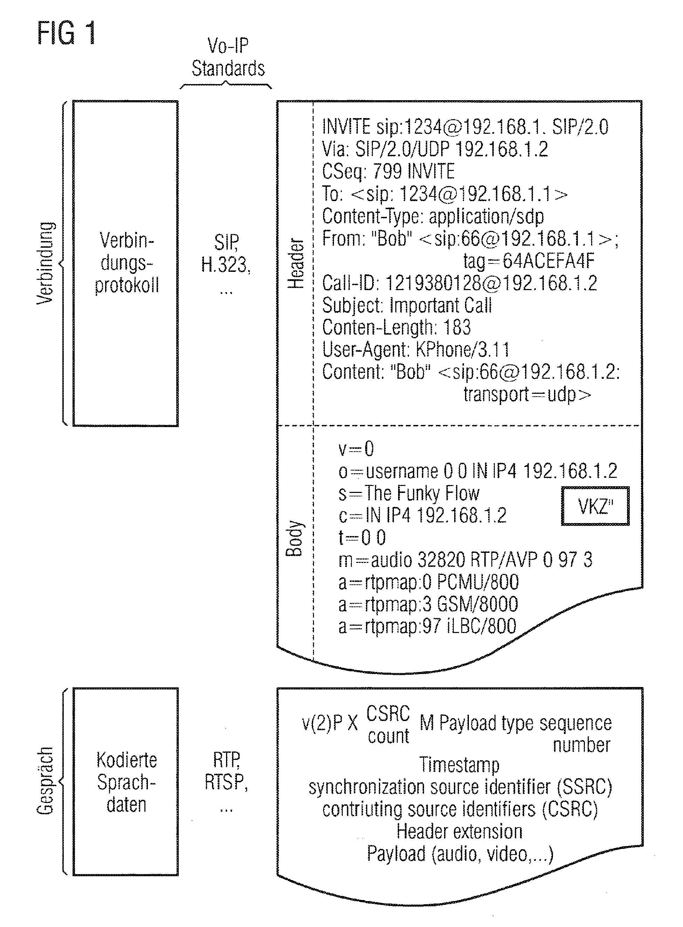

In Figur 1 ist schematisch die Anwendung des erfindungsgemäßen Verbindungskennzeichens VKZ" dargestellt. Zu erkennen ist dabei, wie Telefonieverbindungen über das Internetprotokoll (IP) sogenannte Voice-over-IP (VoIP) Verbindungen prinzipiell aufgebaut sind, insbesondere wenn sie die hierfür bekannten Voice-over-IP (VoIP) Standards wie das Session Initiation Protocol (SIP), das H.323, das Real Time Transport Protocol (RTP) oder das Real Time Streaming Protocol (RTSP) nutzen.

Zu erkennen ist dabei, dass die für eine derartige Kommunikation anfallenden Daten sich grundsätzlich nach zwei Klassen von Daten unterscheiden lassen. Zum einen besteht so eine Kommunikation, wie aus der Figur zu erkennen ist, aus Daten, welche sich aus einem Verbindungsprotokoll, wie beispielsweise dem SIP oder dem H.323 ergebenden Daten, die zur Steuerung einer Voice-over-IP Kommunikation insbesondere für den Ruf eines Partners zur Kommunikation anfallen sowie codierte Sprachdaten, wie sie beispielsweise nach dem Voice-over-IP Standards RTP oder RTSP zusammengestellt sein können und das über die Kommunikationsverbindung geführte Gespräch enthalten.

In der Figur 1 ist also zu erkennen, dass die erfindungsgemäße Verbindungskennzeichnung VKZ" bei dem dargestellten Ausführungsbeispiel als Teil des Verbindungsprotokolls an den gerufenen Teilnehmer übertragen wird , so dass dieser schon, bereits bevor ein Gespräch bzw. eine Verbindung zustande kommt, automatisiert oder von Hand das Gespräch nach Auswertung des Verbindungskennzeichens VKZ" annehmen, abweisen oder einer anderen Behandlung zuführen kann.

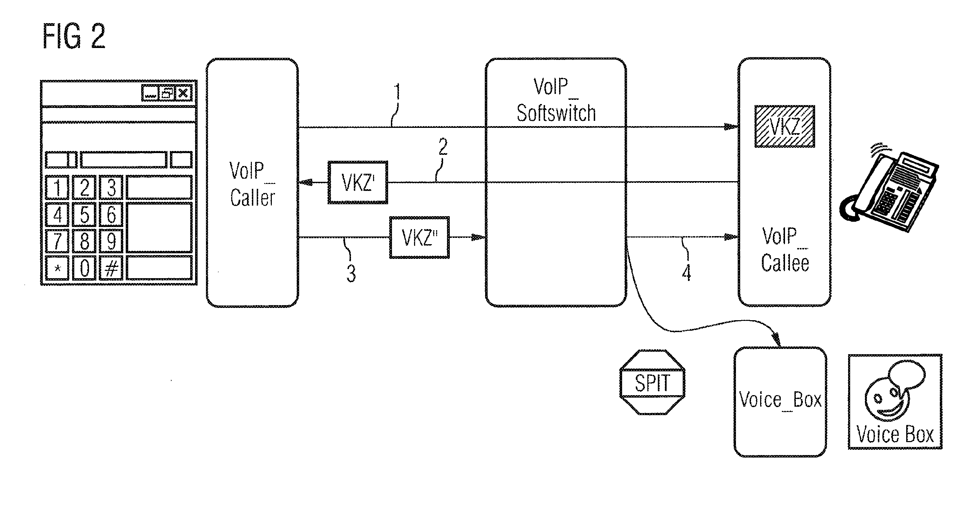

Die Figur 2 zeigt eine Variante der Erfindung hinsichtlich des Ortes, an dem ein von einem Teilnehmer erstelltes erstes Verbindungskennzeichen VKZ hinterlegt wird.

Erfindungsgemäß wird seitens eines Endgerätes, dass auch Anrufe empfangen kann, im Folgenden als Empfänger VoIP CALLEE bezeichnet, als Grundlage des erfindungsgemäßen Verfahrens ein erstes Verbindungskennzeichen erstellt welches zumindest die von dem Empfänger VoIP CALLEE gewünschten Charakteristika enthält, die der Empfänger VoIP CALLEE an zukünftige eingehende Anrufe bzw. Verbindungswünsche und/oder deren Behandlung erwartet.

Dieses erste Verbindungskennzeichen VKZ wird zu einem späteren ersten Zeitpunkt 1 von einem Anrufer VoIP CALLER angefordert, worauf zu einem zweiten Zeitpunkt 2 vom ausstellenden Empfänger VoIP CALLEE das bei ihm gespeicherte erste Verbindungskennzeichen mit beispielsweise der Adresse des anfordernden Gerätes versehen wird und somit auf Grundlage des ersten Verbindungskennzeichens VKZ ein zweites Verbindungskennzeichen VKZ' generiert wird, welches als Antwort auf die Anforderung dem Anrufer VoIP CALLER übermittelt wird, wobei alternativ oder ergänzend bereits bei der Anforderung eine Überprüfung seitens der das erste Verbindungskennzeichen VKZ bewahrenden Einrichtung derart vorgeschaltet werden kann, dass auf Anfragen unberechtigter oder unerwünschter Teilnehmer keine Übermittlung erfolgt.

Hierbei kann die Überprüfung beispielsweise anhand einer im Kommunikationsnetz abrufbaren eine Aufstellung von vertrauenswürdigen enthaltenden Liste, eine sogenannte "White List" durchgeführt werden. Alternativ oder ergänzend kann dies auch anhand einer als nicht vertrauenswürdig eingestufte Teilnehmer enthaltende Liste, eine so genannte "Black List" erfolgen.

Der Anrufer VoIP CALLER kann dann bei Initiierung eines Anrufs zu einem späteren dritten Zeitpunkt 3 das zweite Verbindungskennzeichen VKZ' zumindest mit seiner Adresse, d.h. der Anruferadresse zusätzlich befüllen und/oder mit Charakteristika des Anrufs, d.h. zum Beispiel ob es sich um ein Werbe- oder Geschäftstelefonat handelt oder es ein Privatgespräch ist, so dass somit ein drittes Verbindungskennzeichen VKZ" generiert und den Verbindungsdaten beigefügt wird.

Aufgrund dieses dritten Verbindungskennzeichen VKZ" kann nun eine die Verbindung zwischen dem Anrufer VoIP CALLER und dem Empfänger VoIP CALLEE vermittelnde Einrichtung VoIP SOFTSWITCH, die in dem dritten Verbindungskennzeichen VKZ" enthaltene Charakteristika beispielsweise nach einem Algorithmus, welcher ebenfalls im ersten Verbindungskennzeichen VKZ bereits beispielsweise durch auf den im Kommunikationsnetz enthaltenen Einrichtungen ausführbaren Programmcode enthalten sein kann, ausführen und entsprechend diesem Algorithmus zu einem vierten Zeitpunkt 4 eine Auswertung vornehmen kann, ob der eingehende Verbindungswunsch den vom Empfänger VoIP CALLEE gewünschten Anrufmerkmalen (Charakteristika) entspricht und entsprechend dieser Auswertung die Entscheidung treffen kann, ob der Verbindungswunsch bzw. Anruf durchzustellen ist oder alternative Schritte zur Behandlung des Anrufs durchzuführen sind, wie beispielsweise ein Abweisen des Anrufs und/oder eine Weiterleitung des Anrufs an eine Voice-Box VOICE BOX.

Denkbar ist es dabei, dass entsprechend einer durch die Vermittlungseinrichtung VoIP SOFTSWITCH auf Basis des Auswertungsergebnisses vorgenommenen Bewertung eine Rückmeldung zur Vergabe von Verbindungskennzeichen derart gegeben werden kann, dass in einem Positivfall also bei Übereinstimmung der Anrufmerkmale mit den gewünschten Merkmalen eine Erhöhung der Vertrauenswürdigkeit vermerkt wird, während eine Negativfeststellung, d.h. im Fall der Nichtübereinstimmung von Anrufmerkmalen mit gewünschten Merkmalen die Vertrauenswürdigkeit des Anrufers herabgestuft wird. Ferner kann vorgesehen werden, diese Vertrauenswürdigkeitsbewertung derart auszunutzen, dass bei Erreichen eines bestimmten eine hohe Vertrauenswürdigkeit wiedergebenden Wertes der Anrufer in die White List übernommen wird, während bei Erreichen einer Schwelle, die einen weniger vertrauenswürdigen Teilnehmer kennzeichnet, dieser in die Black List aufgenommen werden kann.

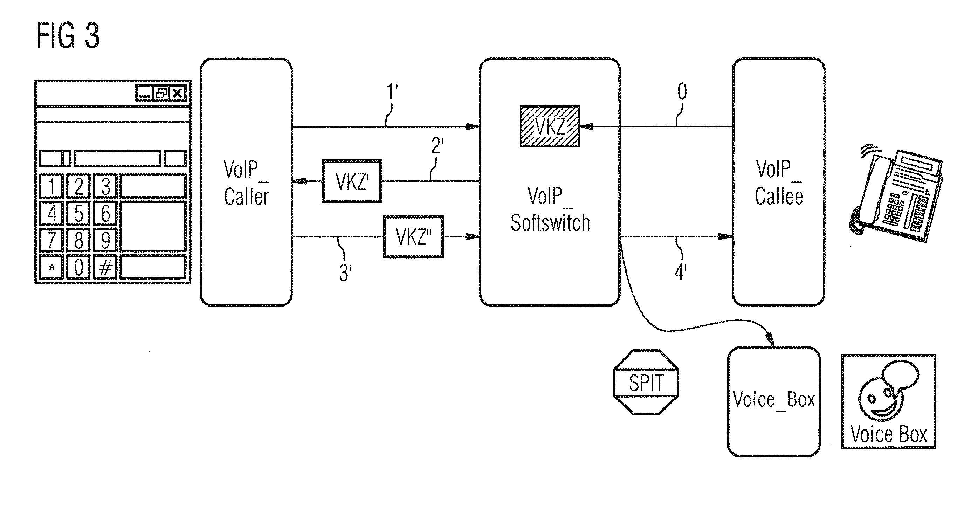

Die Figur 3 zeigt eine zur oben erläuterten Weiterbildung alternative aber innerhalb eines oder mehrerer Kommunikationsnetze ergänzende Vorgehensweise zu der zuvor beschriebenen, bei der das erste Verbindungskennzeichen VKZ zu einem ersten Zeitpunkt 0 vom Empfänger VoIP CALLEE zu der Vermittlungseinrichtung VoIP SOFTSWITCH übertragen wird, es wird also das Vermittlungskennzeichen VKZ in einem Anrufer VoIP CALLER zugeordneten Knoten hinterlegt, wobei hierzu verschiedene Verteilmechanismen für das Vermittlungskennzeichen VKZ im Kommunikationsnetz eingesetzt werden können, so dass der Anrufer VoIP CALLER das Verbindungskennzeichen VKZ bei der Vermittlungseinrichtung VoIP SOFTSWITCH zu einem späteren zweiten Zeitpunkt 1' anfordern muss, um einen Anruf zum Empfänger VoIP CALLEE erfolgreich durchstellen lassen zu können.

Dabei wird zu einem dritten Zeitpunkt 2' das zweite Verbindungskennzeichen VKZ' zum Anrufer VoIP CALLER übertragen, der wiederum analog zum vorhergehenden Beispiel weitere diesen konkreten Anruf kennzeichnende Datenmerkmale in das zweite Verbindungskennzeichen VKZ' eintragen kann und somit ein drittes Verbindungskennzeichen VKZ" generiert, welches den Anruferdaten beigefügt und zu einem vierten Zeitpunkt 3' an die Vermittlungseinrichtung VoIP SOFTSWITCH übertragen wird, so dass die Vermittlungseinrichtung VoIP SOFTSWITCH, wie oben erläutert, zu einem fünften Zeitpunkt 4' den Anruf durchstellen oder als SPIT gekennzeichnet beispielsweise zu einer Voice-Box VOICE BOX weiterleiten kann.

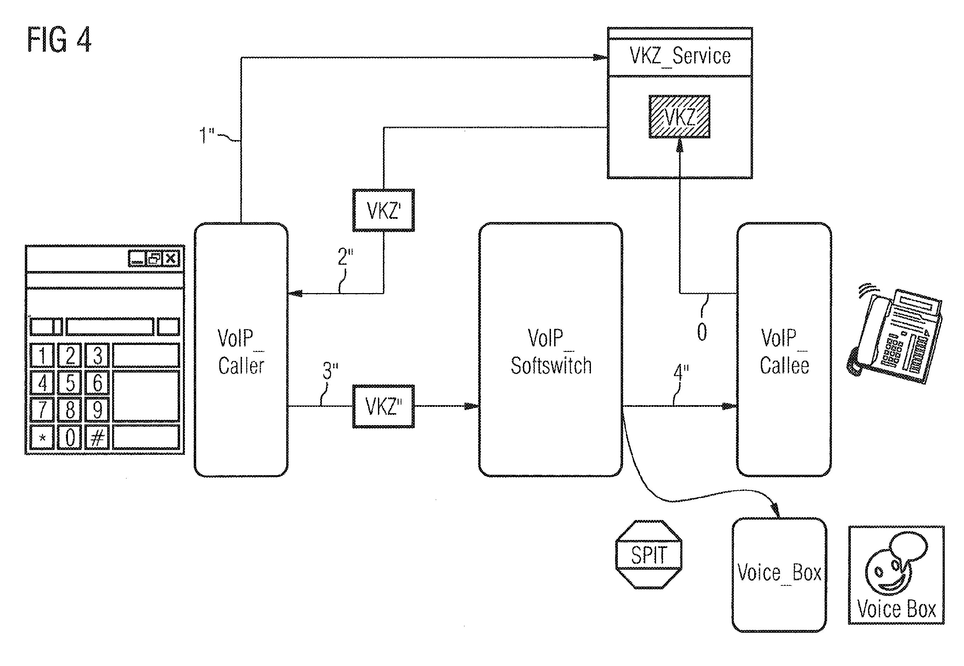

In Figur 4 ist nun ein weiteres Ausführungsbeispiel der Erfindung dargestellt, bei welcher neben den bekannten Einrichtungen Anrufer VoIP CALLER, Vermittlungseinrichtung VoIP SOFTSWITCH, Empfänger VoIP CALLEE und Voice-Box VOICE BOX noch eine Einrichtung, nämlich ein VKZ SERVICE, welcher öffentlich betrieben werden oder auch ein privater Dienstleistungsservice sein kann, das Verbindungskennzeichen speichert und auf Anfrage einem Anforderer übergibt, so dass dieser wie in den vorstehend beschriebenen Ausführungsbeispielen einen Anruf initiieren kann, woraufhin die Vermittlungseinrichtung VoIP SOFTSWITCH auf Grundlage des dritten Verbindungskennzeichens VKZ" den Anruf der oben beschriebenen Behandlung unterwerfen kann.

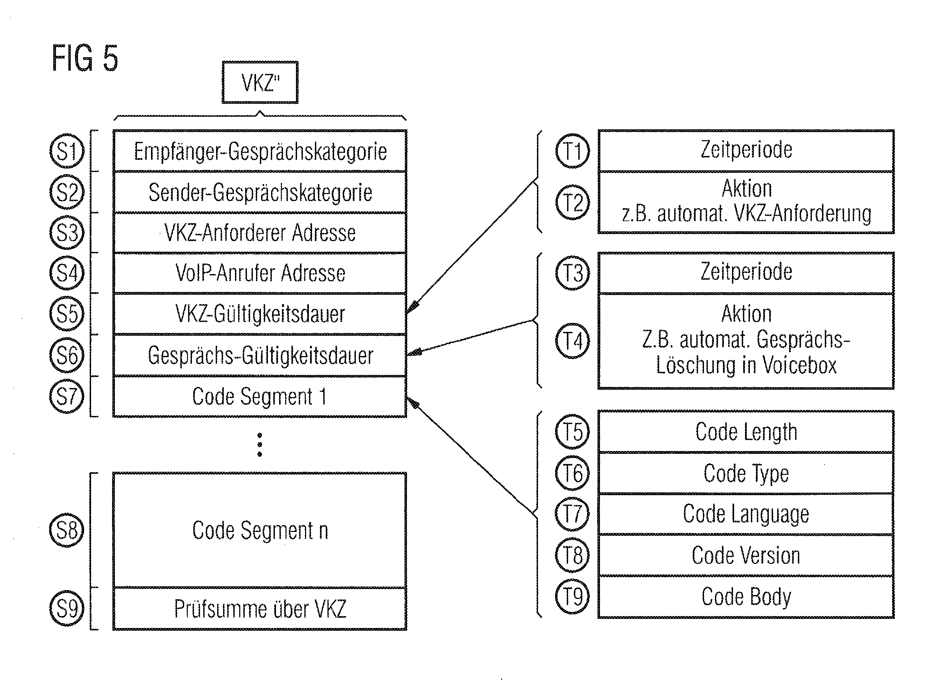

Ein eine derartige Behandlung bereitstellender Aufbau des dritten Verbindungskennzeichens VKZ" ist beispielhaft in der Figur 5 dargestellt.

Zu erkennen ist, dass bei dem Ausführungsbeispiel gemäß der Erfindung ein drittes Verbindungskennzeichen VKZ" in einem ersten Segment S1 eine Angabe über die vom Empfänger zugelassenen bzw. für eine spezielle Behandlung vorgesehenen Gesprächskategorien enthält. Des Weiteren enthält, wie der Darstellung zu entnehmen ist, das Verbindungskennzeichen VKZ" eine Sendergesprächskategorie, welche vom die Kommunikation wünschenden Gesprächspartner (Anrufer) in das Verbindungskennzeichen VKZ" eingetragen worden ist.

Ein aus dem ersten Segment S1 und dem zweiten Segment S2 bestehendes drittes Verbindungskennzeichen VKZ" stellt dabei eine Minimallösung für ein der Erfindung entsprechendes Verbindungskennzeichen VKZ" dar, weil für eine erfindungsgemäße Rufbehandlung bereits der Vergleich zwischen der Empfängergesprächskategorie und der Sendergesprächskategorie hierzu genutzt werden kann.

Besonders vorteilhaft ist es, wenn das Verbindungskennzeichen VKZ" gemäß dem Ausführungsbeispiel ferner eine Adresse des das Gespräch wünschenden Teilnehmers aufweist. Da dieser gemäß der Erfindung das Verbindungskennzeichen VKZ" anfordern muss, bevor er ein Gespräch starten oder initiieren kann, ist dieses in einem dritten Segment des Verbindungskennzeichens VKZ" enthaltene Datum als VKZ-Anfordereradresse bezeichnet. Diese Adresse wird entweder durch den VKZ-Anforderer oder eine das Verbindungskennzeichen VKZ" ausstellenden Entität (z.B.: Endgerät, Vermittlungsstelle oder Public/Private Service) eingetragen.

In einem vierten Segment S4 befindet sich die Anruferadresse des das Gespräch wünschenden Teilnehmers. Diese wird in der Regel die Telefonnummer des Anrufers sein, kann aber auch durch andere adäquate Adressierungsarten realisiert sein. Gemäß der Erfindung kann nun die Adresse des Anforderers (Anfordereradresse) im dritten Segment S3 mit der Anruferadresse im vierten Segment S4 für die in den obigen Beispielen genannte Auswertung verglichen wird, so dass gemäß einem Ausführungsbeispiel der Erfindung der Ruf nur dann durchgeschaltet wird, wenn Anfordereradresse und Anruferadresse übereinstimmen, so dass hierdurch der Missbrauch eines Verbindungskennzeichens VKZ', welches an einen Anforderer übermittelt worden ist, derart, dass dieser das Verbindungskennzeichen VKZ' an unberechtigte Dritte weiterleitet, vermieden wird.

Auch die Kombination allein auf Grundlage des dritten Segments mit dem vierten Segment S4 oder in Kombination mit beispielsweise dem ersten Segment S1 und dem zweiten Segment S2 kann bereits eine Minimallösung des erfindungsgemäßen Verfahrens ermöglichen.

Alternativ oder ergänzend weist das Verbindungskennzeichen VKZ" in einem fünften Segment S5 eine Gültigkeitsdauer auf. Diese kann beispielsweise in einem ersten Teilsegment T1 die Angabe einer Zeitperiode enthalten, die für eine in einem zweiten Teilsegment T2 angegebene Aktion angibt, wann sie auszuführen ist, wie beispielsweise eine automatische VKZ-Anforderung, sobald die Zeitperiode abgelaufen ist.

Alternativ oder ergänzend kann auch das Verbindungskennzeichen VKZ" in einem sechsten Segment S6 die Gültigkeitsdauer eines Gesprächs enthalten, welche in einem dritten Teilsegment T3 ebenfalls die Angabe einer Zeitperiode enthält, die eine in einem vierten Teilsegment T4 spezifizierte Aktion betrifft. Eine derartige Aktion kann z.B. das automatische Löschen eines in der Voice-Box gespeicherten Gesprächs nach Ablauf der Zeitperiode betreffen. Alternativ kann es auch die Zeitperiode beschreiben, in welcher ein Gespräch des mit dem Verbindungskennzeichen VKZ bezeichneten Anforderers zugelassen wird oder auch den Zeitraum, ab welchem der Anrufer (wieder) anrufen kann (nachdem er beispielsweise aufgrund von Missbrauch für eine Zeit suspendiert worden ist).

Alternativ oder ergänzend weist das Verbindungskennzeichen gemäß dem Ausführungsbeispiel in einem siebten bis achten Segment S7, S8 Programmcodeteile 1...n auf, die ein ausführbares Programm beschreiben, welches beispielsweise die gemäß der Erfindung erfolgende Auswertung eines Verbindungskennzeichens VKZ" ermöglicht. Die in dem siebten Segment S7 enthaltenen Programmcodeteile können dabei neben dem ausführbaren Code selbst weitere Teilsegmente T5 bis T8 enthalten, die den Programmcode des siebten Code Segments S7 und achten Code Segments S8 näher spezifizieren, wie beispielsweise die Länge des Codes, den Typ, die Sprache des Codes.

Dadurch wird im Fall einer unerwünschten Verbindung, beispielsweise bei Nichtübereinstimmung der Gesprächskategorie, eine Vorschrift automatisiert ausgeführt werden, wie mit dieser VoIP-Verbindung zu verfahren ist, z.B. Weiterleitung zu einer Voicebox VOICEBOX.

Vorteilhaft ist es dabei auch, wenn in einem neunten Segment S9 eine Information mit der Prüfsumme über das Verbindungskennzeichen VKZ" enthalten ist, so dass Fehler oder Manipulationen leichter detektiert werden können.

Mit der beschriebenen Erfindung ist eine Lösung angegeben, die ein Verfahren und eine Vorrichtung zur Abwehr von unerwünschten SPIT-Verbindungen und Vishing-Verbindungen realisiert, mit dem Ziel eine größtmögliche Sicherheit als auch Komfort für den Nutzer zu bieten.

Die vorliegende Erfindung ist besser auf die Bedürfnisse eines VoIP-Telefonie Teilnehmers abgestimmt als die aus dem Stand der Technik bekannten Lösungen und kann ohne großen administrativen Aufwand in bestehende Kommunikationsnetze eingebunden werden.

Kernstück der Lösung sind die beschriebenen VoIP-Verbindungskennzeichen, anhand derer die VoIP-Verbindungen klassifiziert und verifiziert werden. Zusammen mit weiteren Meta-Informationen, wie z.B. der Gültigkeitsdauer, ergibt sich daraus, wie die VoIP-Verbindung bzw. das Gespräch zu behandeln ist.

Den dargestellten Ausführungsbeispielen ist ein weiterer Kern der Erfindungen zu eigen, der darin liegt, dass im Kommunikationsnetz diese Verbindungskennzeichen hinterlegt werden, so dass diese von einem Sender aus dem Kommunikationsnetz abrufbar sind und beim Herstellen einer VoIP-Verbindung als Verbindungskennzeichen hinzugefügt werden.

Im Unterschied zu den bisherigen Abwehrmaßnahmen, die eine Aktivität auf der Empfängerseite erfordern, arbeitet das erfindungsgemäße Verfahren somit indirekt, d.h. vor dem Verbindungsaufbau eines VoIP-Gespräches muss das Verbindungskennzeichen vom Sender erworben und die VoIP-Verbindung gekennzeichnet werden.

Dabei wird das Verbindungskennzeichen End-to-End zwischen einem Sender und einem Empfänger ausgetauscht und kann mehrfach verwendet werden. Dieses Verbindungskennzeichen kann im Kommunikationsnetz, wie oben schematisch dargestellt, durch einen VoIP-Softswitch analysiert und so ausgewertet werden, dass beim Empfänger nur gekennzeichnete Verbindungen durchgestellt werden. Dadurch wird nur ein begrenzter Kreis von Absendern zugelassen, der bis auf Widerruf VoIP-Verbindungen mit dem Empfänger aufbauen darf. Eine SPIT-Verbindung oder Vishing-Verbindung, die das Verbindungskennzeichen nicht enthält, wird somit in vorteilhafter Weise durch das Kommunikationsnetz frühzeitig abgefangen.

Das Verfahren erlaubt es aber auch, dass gewollte Werbegespräche aufgebaut werden können, wenn der Empfänger dies möchte. Wünscht er dies nicht mehr, so ändert er einfach die Angabe der Gesprächskategorie im Verbindungskennzeichen, woraufhin das Verbindungskennzeichen erneut auf einem dem Benutzer zugeordneten Knoten des Systems hinterlegt wird.

Die Erfindung zeichnet sich ferner dadurch aus, dass die Implementierung in ein bestehendes Kommunikationssystem einfach dadurch möglich ist, dass lediglich die Software zur Erstellung einer VoIP-Verbindungsnachricht und die entsprechende Software auf dem auswertenden VoIP-Softswitch oder den aufgezeigten Alternativen entsprechend dem erfindungsgemäßen Verfahren angepasst werden muss.

Im Kern gilt für alle dargestellten Ausführungsbeispiele, dass
a) beim Erwerb des Verbindungskennzeichens überprüft wird, ob die anfordernde Adresse über DNS auflösbar ist. Adressen, die nicht nachverfolgbar sind, können vom Erwerb des Verbindungskennzeichens ausgeschlossen werden,
b) die anfordernde Adresse Bestandteil des Verbindungskennzeichens ist und in seinem Datenteil hinterlegt wird, so dass somit später analysierbar ist, ob Anforderer und Anrufer identisch sind,
c) beim Anfordern des Verbindungskennzeichens vom zukünftigen Anrufer der Typ des Verbindungswunsches angegeben werden kann. So kann auch ganz bewusst der Charakter der VoIP-Verbindung beschrieben werden, wie beispielsweise, ob es sich um Werbung handelt, oder ob es persönlich, dringend oder geschäftlich ist, ob es eine Verbindungsbestätigung enthalten soll und so fort, wobei die Charakterisierung über vorgegebene und definierbare Parameter erfolgt,
d) der Angerufene dann die Möglichkeit zu entscheiden hat, wie oder was mit dem VoIP-Anruf zu geschehen hat, z.B. Werbung zulassen, oder abweisen, ob eine Umleitung auf eine Voicebox VOICEBOX erfolgen soll oder ein Verweis auf eine kostenpflichtige Alternativ-Rufnummer, wie z.B. eines Mobilfunk- oder Festnetz-Anschlusses. Mit der Erfindung können aber auch ganz gezielte Werbeanrufe durchgestellt werden, z.B. von der eigenen Hausbank, vom eigenen Autohändler, usw.

Ferner kann die Erfindung derart weitergebildet sein, dass für den Fall, dass Charakterisierung und Inhalt des Gesprächs nicht übereinstimmen, weitere entsprechende Maßnahmen ergriffen werden können, beispielsweise zukünftig keinen Anruf des betreffenden Anwenders mehr zulassen (Reputations-Merkmal).

Hierzu können die Verbindungskennzeichen über interne Parameter die Gültigkeit eines VoIP-Anrufes angeben, unter Umständen würde sich ein in einer Voicebox VOICEBOX gespeichertes Gespräch nach Ablauf der Gültigkeitsperiode dann selbst löschen oder VoIP-Anrufe würden nur innerhalb der Gültigkeitsperiode in einer Voicebox VOICEBOX gespeichert werden können.

Zusammenfassend können (neben den dargestellten Varianten) die Verbindungskennzeichen in folgenden Entitäten hinterlegt sein:
1. Im VoIP-Softswitch
3. In einer Email (Email Server)
4. In einer Versit-Card (elektronische Visitenkarte)
5. Auf einer Internet-Page (Web-Server)
6. In einem öffentlich, im Internet zugänglichen Public Service.

Wird das Verbindungskennzeichen vom Empfänger auf einem dem Sender zugeordneten Knoten hinterlegt, kann der Verbindungsaufbau vom Sender bereits am Anfang bei der Einleitung in das Kommunikationsnetz unterbunden werden.

Hervorzuheben ist, dass im Falle, dass das Verbindungskennzeichen VKZ vom Empfänger bei einem "Public Service" oder "Private Service" hinterlegt wird, die Erfindung derart vorteilhaft weitergebildet werden kann, dass die Übertragung des Verbindungskennzeichens an den Anrufer von einer Gebührenzahlung an den Betreiber des Public Service oder Private Service abhängig gemacht werden.

Diese Art des Erwerbs des Verbindungskennzeichens beinhaltet somit weitere Kontrollmöglichkeiten. Wird das Verbindungskennzeichen VKZ vom VoIP-Client angefordert, so ist steuerbar, dass nur von diesem VoIP-Client die Anrufe angenommen werden. Ebenfalls wäre diese Regel anwendbar auf dem VoIP-Softswitch.

Die Anforderung bzw. das Abrufen eines Verbindungskennzeichens VKZ erfolgt gemäß einer vorteilhaften Weiterbildung protokollgesteuert. Für besondere Sicherheitsanforderungen geschieht dies dabei über ein gesichertes Protokoll. Die Einbindung in die unterschiedlichen Protokollfamilien (SIP, H.323, RTP, RTSP, SMTP, HTTP, usw.) ist gemäß der Erfindung problemlos möglich.

## Patentansprüche

1. Verfahren zum Bereitstellen von Kommunikation in einem VoIP-Kommunikationsnetzwerk mit einer Vielzahl von Netzknoten (VoIP CALLER, VoIP CALLEE, VoIP SWITCH, PUB SERVICE), bei dem
a) von zumindest einem ersten Teilnehmerendgerät (VoIP CALLEE) des VoIP-Kommunikationsnetzwerks eine zumindest eine vom Nutzer des ersten Teilnehmerendgerätes (VoIP CALLEE) gewünschte Eigenschaft von VoIP-Verbindungen enthaltende erste Information in zumindest einem ersten Netzknoten des VoIP-Kommunikationsnetzwerks hinterlegt wird,
b) bei Vorhandensein eines Wunsches nach einer Verbindung zum ersten Teilnehmerendgerät (VoIP CALLEE) seitens eines zweiten Teilnehmerendgerätes (VoIP CALLER),
b1) seitens des zweiten Teilnehmerendgerätes (VoIP CALLER) die erste Information (VKZ) von dem ersten Netzknoten (VoIP CALLER, VoIP CALLEE, VoIP SOFTSWITCH, PUB SERVICE) angefordert wird,
b2) das zweite Teilnehmerendgerät (VoIP CALLER) auf Grundlage zumindest der ersten Information zumindest ein die Verbindung beschreibendes Datenelement (VKZ) bildet, b3) das zweite Teilnehmerendgerät (VoIP CALLER) das die Verbindung beschreibende Datenelement (VKZ") an ein dem Netz zugeordnetes eine Durchschaltung von direkten Verbindungen zwischen Kommunikationspartnern bereitstellendes Funktionselement (VoIP SOFTSWITCH) übermittelt,
c) das Funktionselement das Datenelement derart auswertet, dass es auf Grundlage von zumindest der ersten Information (VKZ) die Verbindung zwischen dem ersten Teilnehmerendgerät (VoIP CALLEE) und dem zweiten Teilnehmerendgerät (VoIP CALLER) etabliert,
**dadurch gekennzeichnet, dass** durch den ersten Netzknoten zur Bildung des Datenelements eine erste Adresse des die erste Information anfordernden zweiten Teilnehmerendgerätes der ersten Information hinzugefügt wird.

2. Verfahren nach Anspruch 1, **dadurch gekennzeichnet, dass** das erste Teilnehmerendgerät als erste Information eine Angabe über zumindest eine für Verbindungen mit dem ersten Teilnehmerendgerät zugelassene Art von Verbindung beifügt.

3. Verfahren nach einem der vorhergehenden Ansprüche, **dadurch gekennzeichnet, dass** das erste Teilnehmerendgerät als erste Information eine Angabe über zumindest eine für Verbindungen mit dem ersten Teilnehmerendgerät zugelassene Kategorie eines Gesprächsinhalts beifügt.

4. Verfahren nach einem der vorhergehenden Ansprüche, **dadurch gekennzeichnet, dass** das erste Teilnehmerendgerät als erste Information eine Angabe über eine erste Gültigkeitsdauer einer Verbindung beifügt.

5. Verfahren nach einem der vorhergehenden Ansprüche, **dadurch gekennzeichnet, dass** das erste Teilnehmerendgerät als erste Information eine Angabe über eine zweite Gültigkeitsdauer für die Zeit des Vorhaltens einer bei der Verbindung hinterlegten Sprachnachricht beifügt.

6. Verfahren nach einem der vorhergehenden Ansprüche, **dadurch gekennzeichnet, dass** das erste Teilnehmerendgerät als erste Information eine Angabe über eine dritte Gültigkeitsdauer einen Zeitraum, in dem ein Hinterlegen einer Sprachnachricht möglich ist, beifügt.

7. Verfahren nach einem der vorhergehenden Ansprüche, **dadurch gekennzeichnet, dass** durch das erste Teilnehmerendgerät als erste Information eine Folge von auf dem ersten Netzknoten ausführbaren Anweisungen beigefügt wird.

8. Verfahren nach einem der vorhergehenden Ansprüche, **dadurch gekennzeichnet, dass** die Adresse des anfordernden zweiten Teilnehmerendgerätes (Anfordereradresse) mit einer Adresse eines ein Gespräch wünschenden Teilnehmers (Anruferadresse) verglichen wird, so dass eine Verbindung zwischen dem ersten Teilnehmerendgerät und einem Teilnehmerendgerät des ein Gespräch wünschenden Teilnehmers nur dann durchgeschaltet wird, wenn die Adresse des anfordernden zweiten Teilnehmerendgerätes (Anfordereradresse) und die Adresse des ein Gespräch wünschenden Teilnehmers (Anruferadresse) übereinstimmen.

9. Verfahren nach einem der vorhergehenden Ansprüche, **dadurch gekennzeichnet, dass**
a) der erste Netzknoten die erste Adresse dahingehend prüft, ob sie eine gemäß dem Domain Name System Dienst "DNS" gebildete Adresse ist,
b) falls die Prüfung ergibt, dass die erste Adresse eine nicht nach DNS auflösbare Adresse ist, ein Versenden der ersten Information unterbleibt.

10. Verfahren nach einem der vorhergehenden Ansprüche, **dadurch gekennzeichnet, dass** durch das zweite Teilnehmerendgerät zur Bildung des Datenelements eine die Kategorie eines Gesprächs beschreibende Information der ersten Information hinzugefügt wird.

11. Verfahren nach einem der vorhergehenden Ansprüche, **dadurch gekennzeichnet, dass** als erster Netzknoten das erste Teilnehmerendgerät verwendet wird.

12. Verfahren nach einem der vorhergehenden Ansprüche, **dadurch gekennzeichnet, dass** als erster Netzknoten ein dem Netz zugeordnetes Gerät mit zur Durchschaltung von direkten Verbindungen zwischen Kommunikationspartnern bereitstellender Funktion verwendet wird.

13. Verfahren nach einem der vorhergehenden Ansprüche, **dadurch gekennzeichnet, dass** als erster Netzknoten ein Email-Server oder ein Web-Server verwendet wird.

14. Verfahren nach einem der vorhergehenden Ansprüche, dadurch gegenzeichnet, dass die erste Information für eine begrenzte Zeit im Netz vorgehalten wird und nach Ablauf der begrenzten Zeit das erste Teilnehmerendgerät erneut eine erste Information hinterlegt.

15. Anordnung zum Bereitstellen von Kommunikation in einem VoIP-Kommunikationsnetzwerk, **gekennzeichnet durch** Mittel zur Durchführung des Verfahrens nach einem der vorhergehenden Ansprüche.

## Claims

1. Method for providing communication in a VoIP communication network having a multiplicity of network nodes (VoIP CALLER, VoIP CALLEE, VoIP SWITCH, PUB SERVICE), wherein
a) at least one first subscriber terminal (VoIP CALLEE) in the VoIP communication network stores a first item of information containing at least one VoIP connection property desired by the user of the first subscriber terminal (VoIP CALLEE) in at least one first network node of the VoIP communication network,
b) when a second subscriber terminal (VoIP CALLER) wishes to connect to the first subscriber terminal (VoIP CALLEE),
b1) the second subscriber terminal (VoIP CALLER) requests the first item of information (VKZ) from the first network node (VoIP CALLER, VoIP CALLEE, VoIP SOFTSWITCH, PUB SERVICE),
b2) the second subscriber terminal (VoIP CALLER) forms at least one data element that describes the connection (VKZ) on the basis of at least the first item of information,
b3) the second subscriber terminal (VoIP CALLER) transmits the data element that describes the connection (VKZ") to a functional element (VoIP SOFTSWITCH) which is assigned to the network and switches through direct connections between communication partners,
c) the functional element evaluates the data element in such a manner that it establishes the connection between the first subscriber terminal (VoIP CALLEE) and the second subscriber terminal (VoIP CALLER) on the basis of at least the first item of information, **characterised in that** a first address of the second subscriber terminal requesting the first item of information is added to the first item of information by the first network node, for the formation of the data element.

2. Method according to claim 1, **characterised in that** the first subscriber terminal appends as a first item of information an indicator relating to at least one type of connection permitted for connections to the first subscriber terminal.

3. Method according to any one of the preceding claims, **characterised in that** the first subscriber terminal appends as a first item of information an indicator relating to at least one category of a call content permitted for connections to the first subscriber terminal.

4. Method according to any one of the preceding claims, **characterised in that** the first subscriber terminal appends as a first item of information an indicator relating to a first validity period of a connection.

5. Method according to any one of the preceding claims, **characterised in that** the first subscriber terminal appends as a first item of information an indicator relating to a second validity period for the time of retention of a speech message stored during the connection.

6. Method according to any one of the preceding claims, **characterised in that** the first subscriber terminal appends as a first item of information an indicator relating to a third validity period in which the storing of a speech message is possible.

7. Method according to any one of the preceding claims, **characterised in that** the first subscriber terminal appends as a first item of information a sequence of operations which can be carried out on the first network node.

8. Method according to any one of the preceding claims, **characterised in that** the address of the second subscriber terminal making the request (requester address) is compared with an address of a subscriber (caller address) wishing to make a call, such that a connection between the first subscriber terminal and a subscriber terminal of the subscriber wishing to make a call is only switched through if the address of the second subscriber terminal (requester address) making the request and the address of the subscriber wishing to make the call (caller address) match.

9. Method according to any one of the preceding claims, **characterised in that**
a) the first network node checks the first address to determine whether it is an address formed in accordance with the Domain Name System "DNS" service,
b) if the check reveals that the first address is an address which cannot be resolved in accordance with DNS, the sending of the first item of information is suppressed.

10. Method according to any one of the preceding claims, **characterised in that**, for the formation of the data element, the second subscriber terminal adds to the first item of information an item of information describing the category of a call,

11. Method according to any one of the preceding claims, **characterised in that** the first subscriber terminal is used as the first network node.

12. Method according to any one of the preceding claims, **characterised in that** a device allocated to the network for switching through direct connections between communication partners is used as the first network node.

13. Method according to any one of the preceding claims, **characterised in that** an E-mail server or a Web server is used as the first network node.

14. Method according to any one of the preceding claims, **characterised in that** the first item of information is retained in the network for a limited time, and, after the expiry of the limited time, the first subscriber terminal again stores a first item of information.

15. Arrangement for providing communication in a VoIP communication network, **characterised by** means for carrying out the method according to any one of the preceding claims.

## Revendications

1. Procédé pour établir une communication dans un réseau de communication Voix sur IP ayant une pluralité de noeuds de réseau (VoIP CALLER, VoIP CALLEE, VoIP SWITCH, PUB SERVICE), selon lequel
a) au moins un premier appareil terminal d'abonné (VoIP CALLEE) du réseau de communication Voix sur IP dépose au moins une première information contenant une propriété de liaisons Voix sur IP, souhaitée par l'utilisateur du premier appareil terminal d'abonné (VoIP CALLEE), dans au moins un premier noeud de réseau du réseau de communication Voix sur IP,
b) en présence d'un souhait d'une liaison avec le premier appareil d'abonné (VoIP CALLEE) du côté d'un deuxième appareil d'abonné (VoIP CALLER),
b1) du côté du deuxième appareil terminal d'abonné (VOIP CALLER), la première information (VKZ) est demandée par le premier noeud de réseau (VoIP CALLER, VoIP CALLEE, VoIP SOFTSWITCH, PUB SERVICE),
b2) le deuxième appareil terminal d'abonné (VoIP CALLER) forme, sur la base au moins de la première information, au moins un élément de données (VKZ) décrivant la liaison, b3) le deuxième appareil terminal d'abonné (VoIP CALLER) transmet l'élément de données (VKZ") décrivant la liaison à un élément fonctionnel (VoIP SOFTSWITCH), associé au réseau, établissant des liaisons directes entre des partenaires de communication,
c) l'élément fonctionnel évalue l'élément de données d'une manière telle qu'il établisse, en raison d'au moins la première information (VKZ), la liaison entre le premier appareil terminal d'abonné (VoIP CALLEE) et le deuxième appareil terminal d'abonné (VoIP CALLER), **caractérisé en ce qu'**une première adresse du deuxième appareil terminal d'abonné demandant la première information est jointe à la première information par le premier noeud de réseau afin de former l'élément de données.

2. Procédé selon la revendication 1, **caractérisé en ce que** le premier appareil terminal d'abonné joint en tant que première information une indication sur au moins un type de liaison autorisé pour des liaisons avec le premier appareil terminal d'abonné.

3. Procédé selon l'une quelconque des revendications précédentes, **caractérisé en ce que** le premier appareil terminal d'abonné joint en tant que première information une indication sur au moins une catégorie d'un contenu conversationnel autorisé pour des liaisons avec le premier appareil terminal d'abonné.

4. Procédé selon l'une quelconque des revendications précédentes, **caractérisé en ce que** le premier appareil terminal d'abonné joint en tant que première information une indication sur une première durée de validité d'une liaison.

5. Procédé selon l'une quelconque des revendications précédentes, **caractérisé en ce que** le premier appareil terminal d'abonné joint en tant que première information une indication sur une deuxième durée de validité pour le temps de présence d'un message vocal déposé lors de la liaison.

6. Procédé selon l'une quelconque des revendications précédentes, **caractérisé en ce que** le premier appareil terminal d'abonné joint en tant que première information une indication sur une troisième durée de validité d'une période temporelle durant laquelle un dépôt d'un message vocal est possible.

7. Procédé selon l'une quelconque des revendications précédentes, **caractérisé en ce que** le premier appareil terminal d'abonné joint en tant que première information une suite d'instructions exécutables sur le premier noeud de réseau.

8. Procédé selon l'une quelconque des revendications précédentes, **caractérisé en ce que** l'adresse du deuxième appareil terminal d'abonné demandant (adresse du demandant) est comparée à une adresse d'un abonné souhaitant une conversation (adresse de l'appelant) de sorte qu'une liaison entre le premier appareil terminal d'abonné et un appareil terminal d'abonné de l'abonné souhaitant une conversation soit ensuite établie uniquement si l'adresse du deuxième appareil terminal d'abonné demandant (adresse du demandant) et l'adresse de l'abonné souhaitant une conversation (adresse de l'appelant) coïncident.

9. Procédé selon l'une quelconque des revendications précédentes, **caractérisé en ce que**
a) le premier noeud de réseau vérifie à ce sujet si la première adresse est une adresse formée selon le système DNS (système d'adressage par domaines, de l'anglais Domain Name System),
b) s'il résulte de la vérification que la première adresse n'est pas une adresse pouvant être résolue selon le système DNS, un envoi de la première information n'a pas lieu.

10. Procédé selon l'une quelconque des revendications précédentes, **caractérisé en ce que**, pour la formation de l'élément de données, le deuxième appareil terminal d'abonné joint à la première information une information décrivant une conversation.

11. Procédé selon l'une quelconque des revendications précédentes, **caractérisé en ce que** le premier appareil terminal d'abonné est employé en tant que premier noeud de réseau.

12. Procédé selon l'une quelconque des revendications précédentes, **caractérisé en ce qu'**un appareil, associé au réseau et doté d'une fonction d'établissement de liaisons directes entre des partenaires de communication, est employé en tant que premier noeud de réseau.

13. Procédé selon l'une quelconque des revendications précédentes, **caractérisé en ce qu'**un serveur de courrier électronique ou un serveur Web est employé en tant que premier noeud de réseau.

14. Procédé selon l'une quelconque des revendications précédentes, **caractérisé en ce que** la première information est présente dans le réseau pendant un temps limité et que, après l'expiration du temps limité, le premier appareil terminal d'abonné dépose de nouveau une première information.

15. Dispositif d'établissement de communications dans un réseau de communication Voix sur IP, **caractérisé par** des moyens destinés à exécuter le procédé selon l'une quelconque des revendications précédentes.
